Europäisches Patentamt

European Patent Office

Office européen des brevets

(19)

(11) Veröffentlichungsnummer : **0 049 850**
**B1**

(12)

# EUROPÄISCHE PATENTSCHRIFT

(45) Veröffentlichungstag der Patentschrift :
**19.12.84**

(21) Anmeldenummer : **81107963.1**

(22) Anmeldetag : **06.10.81**

(51) Int. Cl.³ : **B 01 D 15/08, G 01 N 31/08**

(54) **Chromatograph für Druckchromatographie.**

(30) Priorität : **09.10.80 DE 3038132**

(43) Veröffentlichungstag der Anmeldung :
**21.04.82 Patentblatt 82/16**

(45) Bekanntmachung des Hinweises auf die Patenterteilung : **19.12.84 Patentblatt 84/51**

(84) Benannte Vertragsstaaten :
**AT BE CH DE FR GB IT LI NL SE**

(56) Entgegenhaltungen :
**EP-A- 0 008 921
DE-A- 1 598 506
DE-A- 2 650 884
FR-A- 2 250 556
US-A- 3 966 609**

(73) Patentinhaber : **HOECHST AKTIENGESELLSCHAFT
Postfach 80 03 20
D-6230 Frankfurt am Main 80 (DE)**

(72) Erfinder : **Teetz, Volker, Dr.
An der Tann 20
D-6238 Hofheim am Taunus (DE)**
Erfinder : **Uhmann, Rainer, Dr.
An der Landwehr 5
D-6239 Kriftel (DE)**
Erfinder : **Knapp, Rudolf
Zeilring 5
D-6239 Eppstein/Taunus (DE)**

## Beschreibung

Die Erfindung betrifft einen Chromatographen für Druckchromatographie, der aus einer Trennsäule mit darin beweglich angeordnetem Kolben besteht.

Nach G-I-T Fachzeitschrift für das Laboratorium, 20. Jahrgang, 1976, Seite 821, ist eine Trennsäule für chromatographische Zwecke mit einem darin angeordneten pneumatischen Kolben mit einfachem Dichtring bekannt. Nach Füllen der Trennsäule mit einer Suspension aus stationärer Phase, z. B. Silikagel und Eluens wird durch Belasten des Kolbens die stationäre Phase axial komprimiert und verfestigt.

Man erhält eine Säulenpackung, die während des Trennvorgangs weitgehend homogen bleibt. Nachteilig bei diesem Chromatographen ist die Konstruktion des Kolbens, da ein abbrasiver und chemischer Angriff auf den Kolben, insbesondere seine Dichtung, und die Zylinderwand der Trennsäule durch das Säulenfüllmaterial nicht vermieden werden kann.

Hier will die Erfindung Abhilfe schaffen. Die Erfindung, wie sie in den Ansprüchen gekennzeichnet ist, löst die Aufgabe durch einen Kolben, der aus einem Fußteil mit Einrichtung zur Aufnahme der Kolbenstange und einem Kopfteil besteht, die gegeneinander verschiebbar angeordnet sind, das Kopfteil einen zentrierenden Zapfen aufweist, der in das Fußteil hineinragt, konzentrisch zum Zapfen eine Feder angeordnet ist, auf der sich das Kopfteil abstützt, das Kopfteil auf seinem Umfang Ausnehmungen zur Aufnahme von mindestens zwei Dichtungen und einen Ringkanal aufweist, der aus einem Haltering für die eine Dichtung gebildet wird und mit dem Sammelraum verbunden ist, und die andere Dichtung von einem konzentrisch um die Feder angeordneten und durch das Fußteil unterstützten Ring in ihrer Ausnehmung gehalten wird.

Es kann vorteilhaft sein, zwischen den Dichtungen eine Leckageleitung anzuordnen.

Die durch die Erfindung erreichten Vorteile sind im wesentlichen darin zu sehen, daß der abbrasive Angriff auf Kolben und Dichtungen weitgehend vermieden und während des Trennens eine für den störungsfreien Ablauf des Trennvorgangs erforderliche einwandfreie und dauerhafte Dichtung zwischen Zylinderwand und Kolben gewährleistet werden kann.

Im Folgenden wird die Erfindung anhand einer lediglich einen Ausführungsweg darstellenden Zeichnung näher erläutert.

Die Trennsäule 3, vorzugsweise aus Edelstahl, wird auf einer Seite durch einen beweglichen Kolben abgeschlossen, der aus einem Fußteil 2 und einem Kopfteil 1 besteht, die gegeneinander verschiebbar sind. Das Fußteil 2 ist mit einer Einrichtung 4 zur Aufnahme der Kolbenstange 5 versehen. Das Kopfteil 1, auf dessen Stirnseite sich ein mit einer Sinterplatte 6 abgedeckter Sammelraum 7 für die Flüssigkeit befindet, der eine Verbindungsleitung 8 zu der Stirnseite entgegengesetzten Seite des Kolbens aufweist, besitzt einen Zapfen 9. Dieser Zapfen 9 ragt in das Fußteil 2 hinein. Er zentriert die beiden Kolbenteile. An seinem Ende befindet sich eine Nut zur Aufnahme eines Sicherungsringes 11. Konzentrisch zum Zapfen 9 ist eine Feder 12, z. B. eine Tellerfeder angeordnet, die auf dem Fußteil 2 aufliegt und auf der sich das Kopfteil 1 abstützt. Das Kopfteil weist einen Haltering 13 und das Fußteil einen Kolbenring 14 auf. Der Haltering 13 unterstützt die Sinterplatte 6, die den Sammelraum 7 abdeckt, und bildet den Ringkanal 16, der über mindestens eine Bohrung 15, Ringkanal 18 und Bohrung 17 mit dem Sammelraum 7 in Verbindung steht. Der Haltering 13 sichert gleichzeitig die in einer Ausnehmung angeordnete Dichtung 19. Während des Zusammenpressens der Trennsäulenfüllung strömt Flüssigkeit aus dem Sammelraum 7 in den Ringkanal 16 und verhindert so das Eindringen der stationären Phase in den Spalt zwischen Kolben und Zylinderwand und insbesondere den Zutritt dieser Phase zur Dichtung 19. Als Dichtung 19 hat sich eine Dichtung mit U-förmigem Querschnitt mit im Hohlraum angeordneter radial wirkender Feder 22 bewährt. In der Ausnehmung ist die Dichtung 21 angeordnet. Sie wird in ihrer Lage durch einen Ring 23 gehalten, der durch das Fußteil 2 unterstützt und gegebenenfalls durch Scheiben 24 und 25 zentriert wird. Zwischen den Dichtungen 19 und 21 kann, falls erforderlich, eine Leckageleitung 26 angeordnet sein. Durch Gegeneinanderschieben von Kopfteil 1 und Fußteil 2 wird Dichtung 21 durch den Ring 23 deformiert und damit an die Zylinderwand gepreßt. Die Federkonstante der Feder 12 ist zweckmäßig so bemessen, daß während des Komprimiervorganges die Kolbenteile auf Distanz gehalten werden, also die Dichtung 19 allein wirksam wird. Erst nach erfolgter Kompression der stationären Phase soll sich das Fußteil 2 gegen das Kopfteil 1 bewegen und der Ring 23 auf die Dichtung 21 drücken, sodaß im stationären Zustand des Kolbens neben Dichtung 19 auch Dichtung 21 wirksam wird. Über Anschlußstück 27 wird während des Komprimierens ein starker Flüssigkeitsstrom durch den Kolben gepreßt.

Das andere Ende der Trennsäule ist durch eine Fritte 28 und den flanschartigen Deckel 29 abgeschlossen. Im Deckel 29 befindet sich ebenfalls ein Sammelraum 30 für die Flüssigkeit und damit verbundene Anschlußmöglichkeit 10 für eine Leitung.

20 deutet die Halterung für den Chromatographen an.

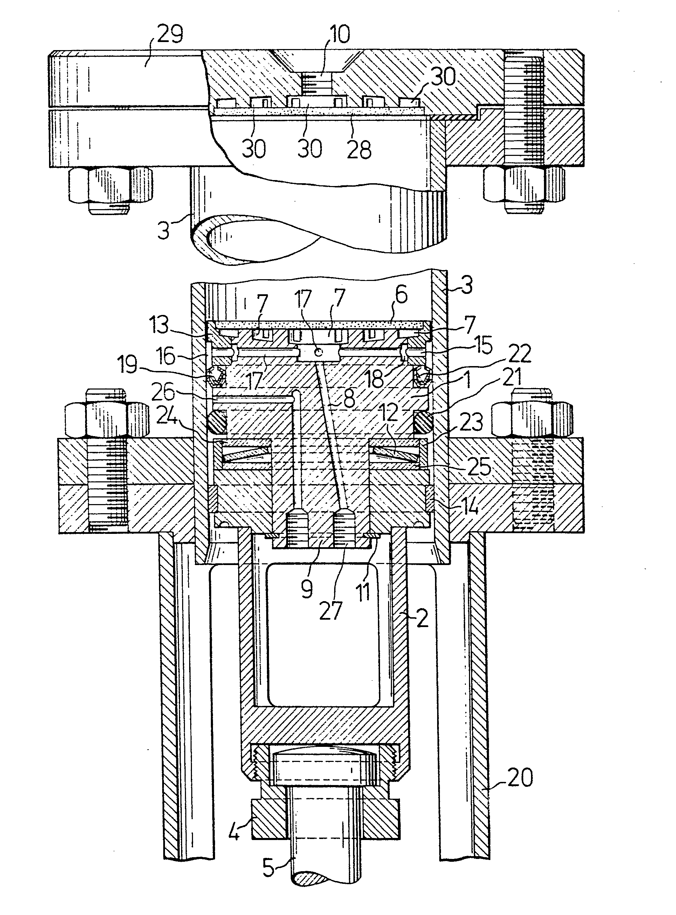

## Ansprüche

1. Chromatograph für Druckchromatographie bestehend aus einer Trennsäule mit einem darin beweglich angeordneten Kolben mit Kolbenstange, auf dessen Stirnseite sich ein mit einer Fritte abgedeckter Sammelraum für Flüssigkeit befindet, der eine Verbindungsleitung zur der Stirnseite entgegengesetzten Seite des Kolbens aufweist, dadurch gekennzeichnet, daß der Kolben aus einem Fußteil (2) mit Einrichtung (4) zur Aufnahme der Kolbenstange (5) und einem Kopfteil (1) besteht, die gegeneinander verschiebbar angeordnet sind, das Kopfteil (1) einen zentrierenden Zapfen (9) aufweist, der in das Fußteil (2) hineinragt, konzentrisch zum Zapfen (9) eine Feder (12) angeordnet ist, auf der sich das Kopfteil (1) abstützt, das Kopfteil auf seinem Umfang Ausnehmungen zur Aufnahme von mindestens zwei Dichtungen (19, 21) und einen Ringkanal (16) aufweist, der aus einem Haltering (13) für die eine Dichtung (19) gebildet wird und mit dem Sammelraum (7) verbunden ist, und die andere Dichtung (21) von einem konzentrisch um die Feder (12) angeordneten und durch das Fußteil (2) unterstützten Ring (23) in ihrer Ausnehmung gehalten wird.

2. Chromatograph nach Anspruch 1, dadurch gekennzeichnet, daß zwischen den Dichtungen (19, 21) eine Leckage-Leitung (26) angeordnet ist.

### Claims

1. A chromatograph for pressure chromatography, comprising a separation column which has, arranged so that it can move therein, a plunger which has a plunger stem and has, on its front face, a collecting space for liquid, which is covered by a frit and which has a connecting line to the face of the plunger opposite to the front face, wherein the plunger comprises a lower part (2) having a device (4) to accommodate the plunger stem (5), and an upper part (1), the two parts being arranged so that they can be moved in relation to one another, the upper part (1) has a centering peg (9) which projects into the lower part (2), a spring (12) on which the upper part (1) is supported, is located concentrically to the peg (9), the upper part has recesses on its circumference to accommodate at least two seals (19, 21) and a ring channel (16) which is formed by a retaining ring (13) for one seal (19), and is connected to the collecting space (7), and the other seal (21) is held in its recess by a ring (23) which is located concentrically around the spring (12) and is supported by the lower part (2).

2. A chromatograph as claimed in claim 1, wherein a leakage line (26), is fitted between the seals (19, 21).

### Revendications

1. Chromatographe pour chromatographie sous pression se composant d'une colonne séparatrice dans laquelle peut se déplacer un piston muni d'une tige et sur le côté frontal duquel se trouve un volume collecteur de liquide recouvert par une partie frittée et qui comporte un conduit de liaison avec le côté du piston qui est opposé au côté frontal, caractérisé en ce que le piston se compose d'une partie de base (2) pourvue d'un dispositif (4) servant à recevoir la tige de piston (5) et d'une partie de tête (1), qui sont disposées de façon à pouvoir se déplacer l'une par rapport à l'autre, la partie de tête (1) comportant un téton de centrage (9) qui pénètre dans la partie de base (2) et il est prévu concentriquement au téton (9) un ressort (12) contre lequel s'appuie la partie de tête (1), cette partie de tête comportant sur sa périphérie des évidements servant à recevoir au moins deux joints d'étanchéité (19, 21) et un canal annulaire (16) qui est formé par une bague de retenue (13) pour l'un des joints d'étanchéité (19) et qui est relié au volume collecteur (7) tandis que l'autre joint d'étanchéité (21) est maintenu dans son évidement par une bague (23) diposée concentriquement autour du ressort (12) et soutenue par la partie de base (2).

2. Chromatographe selon la revendication 1, caractérisé en ce qu'il est prévu un conduit de fuite (26) entre les joints d'étanchéité (19, 21).